# FASCICULE DE BREVET EUROPEEN

(11) **EP 3 071 858 B1**
(45) Date de publication et mention de la délivrance du brevet: **19.08.2020**
(21) Numéro de dépôt: 14798809.1
(22) Date de dépôt: 12.11.2014
(51) Int. Cl.: F16D 55/2265

(54) **FREIN À DISQUE À ÉTRIER COULISSANT À ÉVACUATION DE L'AIR ENTRE COLONNETTES ET ALÉSAGES**
GLEITSATTELSCHEIBENBREMSE MIT GLEITSTIFTENTLÜFTUNG
SLIDING CALIPER DISC BRAKE HAVING EVACUATION OF AIR BETWEEN PINS AND BORES

(30) Priorité: 18.11.2013 FR 1361310
(43) Date de publication de la demande: 28.09.2016
(73) Titulaire: Chassis Brakes International B.V., 5656 AG Eindhoven (NL)
(72) Inventeur: GAYE, André, Dalian 116600 (CN); MERRIEN, Sandra, 75020 Paris (FR)
(74) Mandataire: Brevalex
(86) Numéro de dépôt international: PCT/EP2014/074375
(87) Numéro de publication internationale: WO 2015/071309

(56) Documents cités:
- CN-A- 103 062 262
- CN-U- 202 349 032
- CN-U- 203 082 090
- DE-U1-202006 006 142

## Description

### DOMAINE TECHNIQUE DE L'INVENTION

L'invention se rapporte à un frein à disque de véhicule automobile.

### ARRIERE PLAN TECHNIQUE DE L'INVENTION

L'invention se rapporte plus particulièrement à un frein à disque de véhicule automobile comportant :
- une chape qui comporte deux alésages étagés d'axes parallèles, dont chacun comporte au moins un premier tronçon ;
- un étrier qui est monté coulissant axialement par rapport à la chape ;
- deux colonnettes d'axes parallèles dont chacune comporte une extrémité axiale de fixation fixée à l'étrier et au moins un tronçon de guidage en coulissement axial de l'étrier par rapport à la chape qui s'étend à partir d'une extrémité libre de la colonnette associée et qui est monté coulissant dans le premier tronçon de l'alésage étagé associé de la chape.

Dans cette conception, le tronçon de guidage de chaque colonnette est monté coulissant dans le premier tronçon de l'alésage associé qui est borgne ou fermé, pour des raisons d'étanchéité et de protection de cette zone de guidage en coulissement, et une quantité d'air est ainsi emprisonnée entre l'extrémité libre du tronçon de guidage de la colonnette et le fond du premier tronçon de l'alésage associé.

Lors de l'insertion axiale de la colonnette dans l'alésage associé sur la ligne de montage et d'assemblage, ou bien lors de la phase dite de « dé-freinage » lorsque le disque repousse le patin de frein et l'étrier, ce volume se réduite par avancement progressif de l'extrémité libre du tronçon de guidage de la colonnette en direction du fond du premier tronçon de l'alésage.

Afin que le volume d'air emprisonné ne constitue pas un frein, voire une butée, à cet avancement, il est nécessaire de prévoir des moyens permettant l'évacuation progressive de l'air emprisonné.

On connaît notamment dans l'état de la technique, une série de solutions nécessitant des modifications, complexes à réaliser, de l'alésage étagé qui affectent de plus les facultés de guidage en coulissement de la colonnette associée.

Le document CN202349032U décrit un tronçon de guidage avec un méplat inférieure à la longeur de guidage de l'alésage.

### BREF RESUME DE L'INVENTION

Afin de remédier à ces inconvénients, et de résoudre le problème de l'évacuation de l'air, l'invention propose un frein à disque de véhicule automobile comportant :
- une chape qui comporte deux alésages étagés d'axes parallèles, dont chacun comporte au moins un premier tronçon ;
- un étrier qui est monté coulissant axialement par rapport à la chape ;
- deux colonnettes d'axes parallèles dont chacune comporte :
   -- une extrémité axiale de fixation qui est fixée à l'étrier ; et
   -- au moins un tronçon de guidage en coulissement axial de l'étrier par rapport à la chape qui s'étend à partir d'une extrémité libre de la colonnette associée qui est en regard d'un fond dudit premier tronçon, ledit tronçon de guidage étant monté coulissant dans le premier tronçon de l'alésage étagé associé de la chape,
   caractérisé en ce que :
   - chaque colonnette, en coopération avec la paroi de l'alésage, délimite au moins un canal axial qui s'étend à partir de ladite extrémité libre de la colonnette,
   - l'alésage étagé associé de la chape comporte, du côté de l'extrémité de fixation de la colonnette à l'étrier, un second tronçon,
   - chaque colonnette reçoit un capuchon tubulaire d'étanchéité dont un tronçon est interposé radialement entre la colonnette associée, et ledit second tronçon et
   - une paroi interne de chaque capuchon tubulaire comporte au moins une gorge radiale ou une rainure radiale qui communique avec ledit au moins un canal axial délimité par la colonnette associée.

Selon d'autres caractéristiques de l'invention :
- la paroi interne de chaque capuchon tubulaire comporte une au moins une gorge radiale annulaire qui communique avec ledit au moins un canal axial délimité par la colonnette associée ;
- la paroi interne de chaque capuchon tubulaire comporte une pluralité des gorges radiales annulaires qui sont régulièrement espacées suivant toute une longueur axiale dudit capuchon et dont chacune est apte à communiquer avec ledit au moins un canal axial délimité par la colonnette associée, en fonction de la position axiale de l'étrier par rapport à la chape fixe ;
- la paroi interne de chaque capuchon tubulaire comporte au moins une gorge radiale hélicoïdale qui s'étend suivant toute une longueur axiale dudit capuchon et qui communique avec ledit au moins un canal axial délimité par la colonnette associée ;
- chaque colonnette comporte au moins un méplat qui s'étend à partir de l'extrémité libre de la colonnette suivant une longueur supérieure à celle dudit tronçon de guidage et qui, en coopération avec la paroi de l'alésage, délimite au moins un canal axial qui s'étend à partir de l'extrémité libre de la colonnette et qui communique avec l'espace délimité par ledit fond, par la paroi latérale de l'alésage et par une face transversale d'extrémité libre de la colonnette

### BREF RESUME DES FIGURES

D'autres caractéristiques et avantages de l'invention apparaîtront à la lecture de la description détaillée qui suit pour la compréhension de laquelle on se reportera aux dessins annexés dans lesquels :
- la figure 1 une vue de dessus, avec arrachements partiels, d'un étrier et d'une chape d'un frein à disque, illustrant notamment la coopération de chaque colonnette de l'étrier dans l'alésage étagé associé de la chape d'un frein à disque selon l'invention ;
- la figure 2 est une vue de côté et en perspective représentant à plus grande échelle les deux colonnettes et les deux capuchons d'étanchéité du frein à disque de la figure 1 ;
- la figure 3 est une vue de côté, avec arrachement partiel, représentant de l'étrier et de la chape de la figure 1 ;
- la figure 4 est une vue de détail illustrant l'alésage axial interne d'un capuchon d'étanchéité d'un frein à disque selon l'invention ;
- la figure 5 est une vue en coupe par un plan transversal d'un premier tronçon d'une colonnette reçue dans un premier tronçon de l'alésage du frein à disque selon l'invention.

### DESCRIPTION DETAILLEE DES FIGURES

Dans la description et les revendications qui suivent, on utilisera à titre non limitatif les expressions telles que « orientation longitudinale », « transversale », etc. en référence au dièdre (L, T) représenté aux figures et aux définitions données dans la description.

Dans la description qui va suivre, des chiffres de référence identiques désignent des pièces identiques ou analogues ou ayant des fonctions similaires.

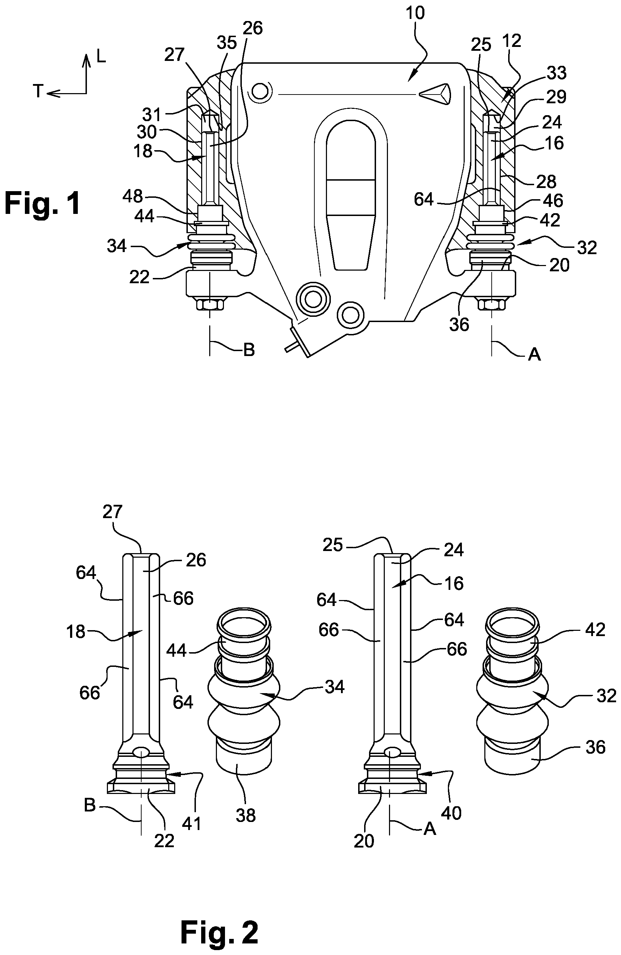

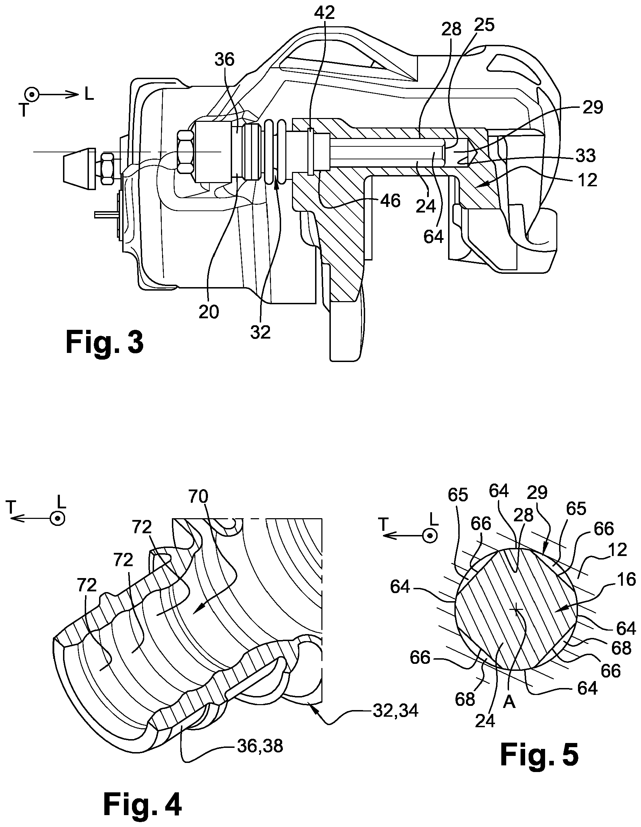

On a représenté aux figures 1 et 3 un étrier 10 et une chape 12 d'un frein à disque (non représenté) de véhicule automobile réalisé conformément à l'état de la technique.

De manière connue, le frein à disque comporte une chape fixe 12 qui comporte deux alésages étagés 29, 31 d'axes parallèles A, B, dont chacun comporte au moins un premier tronçon borgne 28, 30.

Le frein comporte aussi un étrier 10 qui est monté mobile en coulissement axialement, selon une direction longitudinale parallèle aux axes A et B, par rapport à la chape fixe 12.

L'étrier 10 est monté coulissant par rapport à la chape 12 par l'intermédiaire de deux colonnettes parallèles 16, 18 d'axes A, B dont chacune comporte une première extrémité axiale 20, 22 qui est fixée à l'étrier 10, et comporte au moins un tronçon, borgne ou obturé, 24, 26 de guidage en coulissement axial de l'étrier 10 par rapport à la chape 12 qui est monté coulissant, avec un jeu radial, dans le premier tronçon 28, 30 de l'alésage étagé 29, 31 associé de la chape 12.

La surface externe cylindrique de guidage du tronçon 24, 26 de guidage de chaque colonnette 16, 18 comporte ici, à titre d'exemple non limitatif, et comme on peut le voir à la figure 5, quatre portions axiales 64, qui sont opposées diamétralement deux à deux, et dont chacune s'étend angulairement autour de l'axe A, B de chaque colonnette 16, 18.

Pour réaliser les portions 64, chaque portion 64 est par exemple délimitée par une paire de méplats 66 d'orientation axiale.

Chaque tronçon 24, 26 de chaque colonnette 16, 18 est ainsi obtenu ici à partir d'un tronçon de section cylindrique dans lequel sont pratiqués quatre méplats 66.

Chaque portion axiale 64, s'étend ici sur une même longueur axiale.

Chaque tronçon 24, 26 de guidage s'étend à partir d'une extrémité libre 25, 27 de la colonnette associée 16, 18 qui est en regard du fond 33, 35 du premier tronçon associé 28, 30.

Ainsi, chaque tronçon de guidage offre une longueur maximale pour le guidage axial de l'étrier.

Pour permettre notamment l'évacuation, ou "décompression", de l'air contenu dans les alésages étagés borgnes 29 et 30, au moins un méplat 66 de chaque colonnette 16, 18 s'étend à partir de l'extrémité libre 25, 27 de la colonnette suivant une longueur supérieure à celle du tronçon 24, 26 de guidage.

Du fait de la présence d'au moins un méplat 66, chaque colonnette, en coopération avec la paroi de l'alésage borgne 29, 31, délimite au moins un canal axial 65 qui s'étend à partir de l'extrémité libre 25, 27 de la colonnette et qui communique avec l'espace délimité par le fond 33, 35, par la paroi latérale concave de l'alésage 29, 30 et par la face transversale d'extrémité libre 25, 27 de la colonnette 16, 18 associée.

Chaque alésage étagé 29, 31 associé de la chape 12 comporte, du côté de l'extrémité 20, 22 de fixation de la colonnette 16, 18 à l'étrier 10, un second tronçon 46, 48 dit "d'entrée", et chaque colonnette 16, 18 reçoit un capuchon 32, 34 tubulaire en matériau élastomère dont un tronçon axial est interposé radialement entre la colonnette associée 16, 18 et le second tronçon 46, 48 d'entrée.

Les capuchons 32, 34 assurent l'étanchéité des alésages étagés 29, 31 aux poussières.

Chaque capuchon 32, 34 comporte une extrémité 36, 38 qui est emboîtée sur une collerette 40, 41 de l'extrémité 20, 22 de fixation de chaque colonnette 16, 18, et il comporte un tronçon opposé 42, 44 qui est interposé radialement entre chaque colonnette 16, 18 et le second tronçon d'entrée 46, 48 de l'alésage étagé 29, 31 associé de la chape 12.

Pour permettre la décompression de l'air contenu dans les alésages étagés 29 et 30, les capuchons 32, 34 sont associés aux méplats 66 précédemment évoqués en proposant, pour chaque colonnette, au moins un canal 65 permettant un passage de l'air vers l'extérieur.

A cet effet, une paroi de l'alésage interne 70 de chaque capuchon tubulaire 32, 34 comporte au moins une gorge radiale interne 72.

Dans cette configuration, la gorge radiale interne 72 "croise" au moins un canal axial 65, délimité par un méplat 66 de la colonnette concernée et par la paroi de l'alésage 29, 31.

La communication fluidique entre le canal axial 65 et la gorge 72 est assurée en permanence, et ainsi la circulation et l'évacuation progressive de l'air contenu dans l'espace délimité à l'extrémité avant borgne de l'alésage 29, 31 (dans lequel débouche le canal 65) vers le milieu extérieur, c'est-à-dire vers les parties d'extrémité en forme de soufflet.

Selon un premier mode de réalisation des capuchons 32, 34 selon l'invention, qui est représenté à la figure 4, la paroi interne 70 de chaque capuchon 32, 34 tubulaire comporte une pluralité des gorges radiales annulaires 72 qui sont régulièrement espacées suivant toute la longueur axiale du capuchon 32.

En variante, selon un second mode de réalisation (non représenté), la paroi interne 70 du capuchon 32, 34 comporte une seule gorge hélicoïdale, de pas déterminé, qui s'étend suivant toute la longueur axiale du capuchon 32, 34 et qui, de ce fait, "croise" lesdits canaux axiaux en plusieurs points.

Dans l'exemple de réalisation colonnettes décrit précédemment, chaque colonnette délimite, à titre non limitatif, quatre canaux axiaux 65 dont chacun est en permanence en communication avec au moins une rainure radiale 72 d'évacuation de l'air vers « l'extérieur ».

L'orientation non axiale des rainures permet de plus de ne pas pénaliser les autres fonctions telles que le guidage en coulissement.

L'invention n'est pas limitée à la conception de principe qui vient d'être décrite. Selon une "inversion mécanique" classique dans le domaine, les colonnettes peuvent être fixées à l'étrier et les alésages associés peuvent être formés dans la chape.

L'invention n'est pas non plus limitée à la conception proposée d'un ou plusieurs canaux axiaux 65 obtenu(s) à la faveur d'un ou plusieurs méplat(s) 66. A titre de variante, au moins un canal mettant en communication l'extrémité borgne de l'alésage avec une gorge ou une rainure du capuchon associé peut être réalisé sous toute forme appropriée.

## Revendications

1. Frein à disque de véhicule automobile comportant :
- une chape (12) qui comporte deux alésages étagés d'axes parallèles, dont chacun comporte au moins un premier tronçon (28, 30) ;
- un étrier (10) qui est monté coulissant axialement par rapport à la chape (12) ;
- deux colonnettes (16, 18) d'axes (A, B) parallèles dont chacune comporte :
-- une extrémité axiale (20, 22) de fixation qui est fixée à l'étrier (10) ; et
-- au moins un tronçon (24, 26) de guidage en coulissement axial de l'étrier (10) par rapport à la chape (12) qui s'étend à partir d'une extrémité libre (25, 27) de la colonnette (16, 18) associée qui est en regard d'un fond (33, 35) dudit premier tronçon (28, 30), ledit tronçon de guidage étant monté coulissant dans le premier tronçon (28, 30) de l'alésage étagé (29, 31) associé de la chape (12),
**caractérisé en ce que** :
- chaque colonnette (16, 18) comporte au moins un méplat (66) qui s'étend à partir de l'extrémité libre (25, 27) de la colonnette suivant une longueur supérieure à celle dudit tronçon 24, 26 de guidage et qui, en coopération avec la paroi de l'alésage (29, 31), délimite au moins un canal axial (65) qui s'étend à partir de ladite extrémité libre (25, 27) de la colonnette, dans lequel ce canal communique avec l'espace délimité par ledit fond (33, 35), par la paroi latérale de l'alésage et par une face transversale d'extrémité libre (25, 27) de la colonnette (16, 18),
- l'alésage étagé (29, 31) associé de la chape (12) comporte, du côté de l'extrémité (20, 22) de fixation de la colonnette (16, 18) à l'étrier, un second tronçon (46, 48),
- chaque colonnette (16, 18) reçoit un capuchon (32, 34) tubulaire d'étanchéité dont un tronçon (42, 44) est interposé radialement entre la colonnette (16, 18) associée, et ledit second tronçon (46, 48) et
- une paroi interne (70) de chaque capuchon tubulaire (32, 34) comporte au moins une gorge radiale ou une rainure (72) radiale qui communique avec ledit au moins un canal axial (65) délimité par la colonnette associée.

2. Frein à disque selon la revendication 1, **caractérisé en ce que** la paroi interne (70) de chaque capuchon tubulaire (32, 34) comporte une au moins une gorge radiale annulaire (72) qui communique avec ledit au moins un canal axial (65) délimité par la colonnette associée.

3. Frein à disque selon la revendication 2, **caractérisé en ce que** la paroi interne (70) de chaque capuchon (32, 34) tubulaire comporte une pluralité des gorges radiales annulaires (72) qui sont régulièrement espacées suivant toute une longueur axiale dudit capuchon (32) et dont chacune est apte à communiquer avec ledit au moins un canal axial (65) délimité par la colonnette associée, en fonction de la position axiale de l'étrier par rapport à la chape fixe.

4. Frein à disque selon la revendication 1, **caractérisé en ce que** la paroi interne (70) de chaque capuchon (32) tubulaire comporte au moins une gorge radiale hélicoïdale qui s'étend suivant toute une longueur axiale dudit capuchon (32) et qui communique avec ledit au moins un canal axial (65) délimité par la colonnette associée.

## Patentansprüche

1. Scheibenbremse eines Kraftfahrzeugs, aufweisend:
ein Gabelstück (12), das zwei achsenparallele gestufte Bohrungen aufweist, wobei jedes von diesen mindestens ein erstes Teilstück (28, 30) aufweist;
einen Sattel (10), der axial gleitend verschieblich bezüglich des Gabelstücks (12) montiert ist; zwei Bolzenelemente (16, 18) mit parallelen Achsen (A, B), von denen jedes aufweist:
ein axiales Ende (20, 22) zur Befestigung, das am Sattel (10) befestigt ist; und
mindestens ein Teilstück (24, 26) zur axial gleitend verschieblichen Führung des Sattels (10) bezüglich des Gabelstücks (12), das sich ausgehend von einem freien Ende (25, 27) des zugehörigen Bolzenelementes (16, 18) erstreckt, das einem Boden (33, 35) des ersten Teilstücks (28, 30) gegenüberliegt, wobei das Führungsteilstück geleitend verschieblich in dem ersten Teilstück (28, 30) der zum Gabelstück (12) gehörigen gestuften Bohrung (29, 31) montiert ist,
**dadurch gekennzeichnet, dass**:
jedes Bolzenelement (16, 18) mindestens eine Abflachung (66) aufweist, die sich ausgehend von dem freien Ende (25, 27) des Bolzenelementes über eine Länge erstreckt, die größer als die des Führungsteilstücks (24, 26) ist, und die, in Zusammenarbeit mit der Wand der Bohrung (29, 31), mindestens einen Kanal (65) begrenzt, der sich ausgehend von dem freien Ende (25, 27) des Bolzenelementes erstreckt, wobei dieser Kanal mit dem Raum in Verbindung steht, der durch den Boden (33, 35), die Seitenwand der Bohrung und durch eine Stirnfläche des freien Ende (25, 27) des Bolzenelementes (16, 18) begrenzt wird,
wobei die zum Gabelstück (12) gehörige gestufte Bohrung (29, 31), aufseiten des Endes (20, 22) zur Befestigung des Bolzenelementes (16, 18) am Sattel, ein zweites Teilstück (46, 48) aufweist,
jedes Bolzenelement (16, 18) eine rohrförmige Dichtkappe (32, 34) erhält, wobei ein Teilstück (42, 44) von dieser radial zwischen dem zugehörigen Bolzenelement (16, 18) und dem zweiten Teilstück (46, 48) angeordnet ist, und
eine Innenwand (70) jeder rohrförmigen Dichtkappe (32, 34) mindestens eine radiale Hohlkehle oder eine radiale Nut (72) aufweist, die mit dem mindestens einen axialen Kanal (65) in Verbindung steht, der durch das zugehörige Bolzenelement begrenzt wird.

2. Scheibenbremse nach Anspruch 1, **dadurch gekennzeichnet, dass** die Innenwand (70) jeder rohrförmigen Dichtkappe (32, 34) mindestens eine radiale ringförmige Hohlkehle (72) aufweist, die mit dem mindestens einen axialen Kanal (65) in Verbindung steht, der durch das zugehörige Bolzenelement begrenzt wird.

3. Scheibenbremse nach Anspruch 2, **dadurch gekennzeichnet, dass** die Innenwand (70) jeder rohrförmigen Dichtkappe (32, 34) eine Mehrzahl von radialen ringförmigen Hohlkehlen (72) aufweist, die über eine gesamte axiale Länge der Dichtkappe (32) mit regelmäßigen Abständen angeordnet sind und von denen jede geeignet ist, eine Verbindung mit dem mindestens einen axialen Kanal (65) herzustellen, der durch das zugehörige Bolzenelement begrenzt wird, und zwar in Abhängigkeit von der axialen Position des Sattels bezüglich des feststehenden Gabelstücks.

4. Scheibenbremse nach Anspruch 1, **dadurch gekennzeichnet, dass** die Innenwand (70) jeder rohrförmigen Dichtkappe (32) mindestens eine schraublinienartige radiale Hohlkehle aufweist, die sich über eine gesamte axiale Länge des Gabelstücks (32) erstreckt und die mit dem mindestens einen axialen Kanal (65) in Verbindung steht, der durch das zugehörige Bolzenelement begrenzt wird.

## Claims

1. Motor vehicle disc brake including:
- a cover (12) including two tiered bores of parallel axes, each whereof includes at least one first section (28, 30);
- a caliper (10) slidably mounted axially with respect to the cover (12);
- two pins (16, 18) of parallel axes (A, B), each whereof includes:
-- an axial attachment end (20, 22) attached to the caliper (10); and
-- at least one guiding section (24, 26) for axial sliding of the caliper (10) with respect to the cover (12) which extends from a free end (25, 27) of the associated pin (16, 18) which is facing a base (33, 35) of said first section (28, 30), said guiding section being slidably mounted in the first section (28, 30) of the associated tiered bore (29, 31) of the cover (12),
**characterised in that**:
- each pin (16, 18) includes at least one flat section (66) extending from the free end (25, 27) of the pin along a length greater than that of said guiding section (24, 26) and which, engaging with the wall of the bore (29, 31), defines at least one axial channel (65) extending from said free end (25, 27) of the pin, in which said channel communicates with the space defined by said base (33, 35), by the lateral wall of the bore and by a transverse face of the free end (25, 27) of the pin (16, 18),
- the associated tiered bore (29, 31) of the cover (12) includes, on the side of the end (20, 22) for attaching the pin (16, 18) to the caliper, a second section (46, 48),
- each pin (16, 18) receives a tubular sealing cap (32, 34) wherein one section (42, 44) is inserted radially between the associated pin (16, 18), and said second section (46, 48) and
- an inner wall (70) of each tubular cap (32, 34) includes at least one radial groove or a radial channel (72) communicating with said at least one axial channel (65) defined by the associated pin.

2. Disc brake according to claim 1, **characterised in that** the inner wall (70) of each tubular cap (32, 34) includes at least one annular radial groove (72) communicating with said at least one axial channel (65) defined by the associated pin.

3. Disc brake according to claim 2, **characterised in that** the inner wall (70) of each tubular cap (32, 34) includes a plurality of annular radial grooves (72) which are regularly spaced apart along an entire axial length of said cap (32) and each whereof is suitable for communicating with said at least one axial channel (65) defined by the associated pin, according to the axial position of the caliper with respect to the fixed cover.

4. Disc brake according to claim 1, **characterised in that** the inner wall (70) of each tubular cap (32) includes at least one helicoidal radial groove extending along an entire axial length of said cap (32) and communicating with said at least one axial channel (65) defined by the associated pin.
